Europäisches Patentamt

European Patent Office

Office européen des brevets

(11) Publication number: **0 490 354 A2**

## EUROPEAN PATENT APPLICATION

(21) Application number: **91121193.6**

(22) Date of filing: **10.12.91**

(51) Int. Cl.5: **C08L 51/06**, C08K 3/22

(30) Priority: **11.12.90 US 625449**

(43) Date of publication of application:
**17.06.92 Bulletin 92/25**

(84) Designated Contracting States:
**AT BE CH DE FR GB IT LI NL SE**

(71) Applicant: **UNION CARBIDE CHEMICALS AND PLASTICS COMPANY, INC.**
**39 Old Ridgebury Road**
**Danbury Connecticut 06817-0001(US)**

(72) Inventor: **Keough, Michael John**
**13 Jeffrey Lane**
**Bridgewater, New Jersey 08807(US)**

(74) Representative: **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8 W-8000 München 40(DE)**

(54) **Flame retardant compositions.**

(57) A composition comprising:
(a) a homopolymer of ethylene or a copolymer of ethylene and one or more alpha-olefins and/or unsaturated esters, said polymer having bonded thereto, through an anhydride of an unsaturated diacid, about 1 to about 20 percent by weight of one or more polyamides, polyesters,and/or polyurethanes, the percent by weight being based on the weight of component (a); and
(b) a metal hydrate flame retardant compound.

EP 0 490 354 A2

## Technical Field

This invention relates to flame retardant compositions containing an ethylene copolymer and a magnesium hydroxide filler. The compositions are particularly useful in plenum and riser cable.

## Background Art

Plenum and riser cable is used to carry power through ducts which are used to ventilate, for example, high-rise buildings. While a fire occurring in these ducts can be dangerous in its own right, such a conflagration is especially insidious because the smoke and other gases resulting from the fire are transported through the ducts throughout the building, even to parts quite remote from the blaze. In some cases,colorless and odorless gases can invade sleeping quarters housing unsuspecting people.

The cable used in plenums and risers is typically constructed of metal conductors insulated with a polymeric material. These elements are generally twisted to form a core and are protected by another polymeric sheath or jacket material. In certain cases, added protection is afforded by inserting a wrap between the core and the sheath.

Thermoplastic hydrate-filler flame retardant polyolefins are commonly used in applications of this type; however, these compositions are often disadvantaged in their resistance to deformation. The resins required for high levels of hydrate filler addition to obtain the flame resistance sought generally have low crystalline melting points and, hence, very low modulus, i.e., low deformation resistance, even at moderate temperatures. Deformation resistance can be improved by blending high melting resins such as polyamides, polyesters, and polyurethanes with the polyolefins. This approach, unfortunately, has serious consequences in other property areas, e.g. in tensile strength, elongation, and low temperature performance, properties considered vital in flame retardant wire and cable applications.

## Disclosure of Invention

An object of this invention, therefore, is to provide a flame retardant composition, which is superior in all of the five previously mentioned categories, i.e., flame resistance, resistance to deformation, tensile strength, elongation, and low temperature performance. These features are not only advantageous in plenum cable, but in wire and cable applications, generally.

Other objects and advantages will become apparent hereinafter.

According to the invention, a composition has been discovered, which meets the above objective. The composition comprises:

(a) a homopolymer of ethylene or a copolymer of ethylene and one or more alpha-olefins and/or unsaturated esters, said polymer having bonded thereto, through an anhydride of an unsaturated diacid, about 1 to about 30 percent by weight of one or more polyamides, polyesters,and/or polyurethanes, each bearing at least one functional group, which will react with the anhydride, the percent by weight being based on the weight of component (a); and

(b) a metal hydrate flame retardant compound.

## Detailed Description

The copolymers of ethylene useful in the present invention are conventionally used as jacketing and/or insulating materials in wire and cable applications. The comonomers can include alpha-olefins having 3 to 12 carbon atoms, preferably 3 to 8 carbon atoms, and unsaturated esters having 4 to 20 carbon atoms, preferably 4 to 12 carbon atoms.

Examples of the comonomers are propylene, 1-butene, 1-hexene, 4-methyl-1-pentene, 1-octene, vinyl acetate, ethyl acrylate, methyl acrylate, methyl methacrylate, t-butyl acrylate, n-butyl acrylate, n-butyl methacrylate, 2-ethylhexyl acrylate, and other alkyl acrylates. Diolefins such as 1,4-pentadiene, 1,3-hexadiene, 1,5-hexadiene, 1,4-octadiene, and ethylidene norbornene can also be included in the copolymer, usually to provide terpolymers, tetramers, etc.

The ethylene is present in the copolymer in major proportion and can be present in the copolymer in an amount of about 50 to about 99 percent by weight; the alpha-olefins or unsaturated esters in an amount of about 1 to about 50 percent by weight; and the diolefins, if used, in an amount of about 0.5 to about 5 percent by weight, all percentages based on the total weight of the copolymer.

The homopolymers and copolymers of ethylene referred to in this specification can be, and are preferably, non-halogenated; however, they can be halogenated in a conventional manner, generally with

2

chlorine or bromine. High pressure homopolymers of ethylene as well as a homopolymer or copolymer of ethylene having a hydrolyzable silane grafted to their backbones and copolymers of ethylene with a hydrolyzable silane as one of the comonomers can also be utilized in this invention.

Anhydrides of unsaturated aliphatic diacids having 4 to 20 carbon atoms, and preferably 4 to 10 carbon atoms, can be used as the bonding agent, i.e., the agent that bonds the ethylene based polymer to the polyamide, polyester, or polyurethane. Examples of anhydrides, which are useful in this invention, are maleic anhydride, itaconic anhydride, and nadic anhydride. The preferred anhydride is maleic anhydride. Excess anhydride, if present after bonding, can be removed by devolatilization at temperatures in the range of about 200°C to about 250°C.

The bonding is accomplished by using an organic peroxide catalyst, i.e., a free radical generator, such as dicumyl peroxide; lauroyl peroxide; benzoyl peroxide; tertiary butyl perbenzoate; di(tertiary-butyl) peroxide; cumene hydroperoxide; 2,5-dimethyl-2,5-di(t-butyl-peroxy) hexyne-3; 2,5-dimethyl-2,5-di(t-butyl-peroxy)hexane; tertiary butyl hydroperoxide; isopropyl percarbonate; and alpha,alpha'-bis-(tertiarybutylperoxy)diisopropylbenzene.

The proportions of components in the composition based on 100 parts of the ethylene homopolymer or copolymer component, in parts by weight, are about as follows:

| Component | Broad Range | Preferred Range |
|---|---|---|
| anhydride | 0.05 to 10 | 0.1 to 5 |
| total polyamide, polyester, and/or polyurethane | 1 to 30 | 1 to 15 |
| organic peroxide | 0.05 to 5 | 0.10 to 1 |
| antioxidant | 0.01 to 1 | 0.1 to 0.5 |

Bonding temperatures can be in the range of about 100 to about 300°C and are preferably in the range of about 150 to about 200°C.

The polymer, which is bonded to the polyethylene can be a polyamide, a polyester, or a polyurethane. Mixtures of two or more of any of these polymers can be used. The polyamides, particularly the nylons, are preferred. All of these polymers are conventional condensation polymers and are prepared by similar methods. Typical methods for the preparation of the polyamides include the reaction of a diamine and a dibasic acid; the reaction of an acid chloride or anhydride with an amine; and the aminolysis of a diester with a diamine. Reactions of acid anhydrides and diols are typical in the formation of the polyester resins. The reaction of tetramethylene glycol and hexamethyleneisocyanate produces a polyurethane structure which differs from nylon only in that there are two additional oxygens in the adipic acid portion. A more complete description of these polymers, generally referred to as thermoplastic elastomers and engineering plastics, can be found in Stille, Introduction to Polymer Chemistry, John Wiley and Sons, New York, 1962, pages 87 to 114, particularly 87 to 97 and 100 to 102.

Useful in this invention are polyamides and amide copolymers containing a reactive amine end group; polyesters and ester copolymers containing hydroxyls as reactive groups; and polyurethanes and urethane copolymers containing hydroxyls or other anhydride reactive functionalities. Examples are nylon 6; 10; 11; 12; 6,6; 6,10; 6,11; 6,12; butylene/poly(alkylene ether) phthalate; polyester and polyether based thermoplastic polyurethane; and those mentioned in Plastics Technology, Mid-July 1990, 1990-1991 Manufacturing Handbook and Buyers Guide at pages 611 to 616, 782, 784, and 793 under the names nylon or PEBAX™ polyamides, HYTREL™ polyesters, and ESTANE™ polyurethanes.

In accomplishing the bonding, the order of addition of the components is not significant because the polyamides, polyesters, and polyurethanes are the last to melt of the three materials involved in the process.

The metal hydrate flame retardant compound can be any of those used conventionally such as magnesium hydroxide and aluminum hydroxide. A particularly preferred magnesium hydroxide and a method for its preparation are described in United States Patent 4,098,762. Preferred characteristics for this magnesium hydroxide are (a) a strain in the ⟨101⟩ direction of no more than $3.0 \times 10^{-3}$; (b) a crystallite size in the ⟨101⟩ of more than 800 angstroms; and (c) a surface area, determined by the BET method, of less than 20 square meters per gram.

The amount of metal hydrate used in the composition is in the range of about 30 to about 300 parts by weight of metal hydrate per one hundred parts by weight of ethylene polymer and is preferably in the range of about 100 to about 250 parts by weight of metal hydrate.

The metal hydrate is preferably surface treated with a saturated or unsaturated carboxylic acid having about 8 to about 24 carbon atoms and preferably about 12 to about 18 carbon atoms or a metal salt thereof.

Mixtures of these acids and/or salts can be used, if desired. Examples of suitable carboxylic acids are oleic, stearic, palmitic, isostearic, and lauric; of metals which can be used to form the salts of these acids are zinc, aluminum, calcium, magnesium, and barium; and of the salts themselves are magnesium stearate, zinc oleate, calcium palmitate, magnesium oleate, and aluminum stearate. The amount of acid or salt can be in the range of about 0.1 to about 5 parts of acid and/or salt per one hundred parts of metal hydrate and is preferably about 0.25 to about 3 parts per one hundred parts of metal hydrate. The surface treatment is described in United States Patent 4,255,303. The acid or salt can be merely added to the composition in like amounts rather than using the surface treatment procedure, but this is not preferred.

The compositions of this invention are useful in the preparation of jacketing material for electrical conductors or communication mediums such as a sheath for a glass core in fiber optics applications.

Red phosphorus is preferably added to the composition to improve flame resistance. The amount of red phosphorus can be in the range of about 0.5 to about 10 parts by weight per 100 parts by weight of ethylene polymer and is preferably in the range of about 1 to about 8 parts by weight.

Conventional additives in conventional amounts can be added to the composition of this invention. Useful additives are antioxidants, ultraviolet absorbers, antistatic agents,pigments, dyes, slip agents, plasticizers, processing aids, lubricants, stabilizers, smoke inhibitors, viscosity control agents, vulcanizing agents, crosslinking agents, crosslinking catalysts, and crosslinking boosters.

Examples of antioxidants are: hindered phenols such as tetrakis[methylene(3,5-di-tert-butyl-4-hydroxyhydrocinnamate)]methane and thiodiethylene bis(3,5-di-tert-butyl-4-hydroxy) hydrocinnamate; phosphites and phosphonites such as tris(2,4-di-tert-butylphenyl)phosphite and di-tert-butylphenylphosphonite; various amines such as polymerized 2,2,4-trimethyl-1,2-dihydroquinoline; and silica. A tetrakis methane compound is preferred. Antioxidants can be used in amounts of about 1 to about 5 parts by weight per hundred parts by weight of ethylene copolymer.

The patents and publications mentioned in this specification are incorporated by reference herein.

The invention is illustrated by the following examples.

Examples 1 to 14

A Brabender™ mixer is heated to 130°C, and the components set forth in Table I are added. Following flux of the polyolefin resin, the temperature is raised to 225°C through a combination of heating and mixing over a five minute period. The material is discharged hot, cooled, and ground in a Wiley mill. A portion of each composition is processed into a test specimen as required by the test procedure for Limiting Oxygen Index (LOI), i.e., ASTM-D 2863-70, and the test procedure is carried out. See, also, United States patent 4,446,279. Limiting Oxygen Index measures and quantifies flame resistance. The higher the LOI number the greater the flame resistance or flame retardance and the lower the emissions of smoke and other harmful gases. Test specimens are also prepared for the other tests, which include tensile strength, tensile elongation, low temperature brittleness, and percent deformation.

The Table II and III materials are prepared by first heating a Brabender™ mixer to 150°C and then adding the Table I blend to the components mentioned in the Tables. Through a combination of heating and mixing, the temperature is raised to 220°C and held for a period of five minutes before discharging. After pressing flat and cooling, the product is ground in a Wiley mill, and test specimens are then prepared as above.

The variables and results are set forth in the following Tables. Amounts of components are given in parts by weight.

TABLE I

| Example | 1 | 2 | 3 | 4 | 5 | 6 | 7 | 8 | 9 | 10 | 11 |
|---|---|---|---|---|---|---|---|---|---|---|---|
| polyethylene | 85.7 | — | — | 42.8 | — | — | — | 85.2 | — | — | 42.6 |
| EVA | — | 85.7 | — | 42.9 | 85.7 | 85.7 | 85.7 | — | 85.2 | — | 42.7 |
| EEA | — | — | 85.7 | — | — | — | — | — | — | 85.2 | — |
| nylon 6 | 14.1 | 14.1 | 14.1 | 14.1 | — | — | — | 14 | 14 | 14 | 14 |
| nylon 12 | — | — | — | — | 14.1 | — | — | — | — | — | — |
| polyester | — | — | — | — | — | 14.1 | — | — | — | — | — |
| polyurethane | — | — | — | — | — | — | 14.1 | — | — | — | — |
| antioxidant | 0.1 | 0.1 | 0.1 | 0.1 | 0.1 | 0.1 | 0.1 | 0.1 | 0.1 | 0.1 | 0.1 |
| distearyl thiodipropionate | 0.1 | 0.1 | 0.1 | 0.1 | 0.1 | 0.1 | 0.1 | 0.1 | 0.1 | 0.1 | 0.1 |
| maleic anhydride | — | — | — | — | — | — | — | 0.4 | 0.4 | 0.4 | 0.4 |
| dicumyl peroxide | — | — | — | — | — | — | — | 0.2 | 0.2 | 0.2 | 0.2 |
| LOI | 18 | 20 | 18 | 19 | 20 | 20 | 19 | 18 | 21 | 18 | 20 |
| tensile strength (psi) | 1876 | 1183 | 935 | 1020 | 950 | 2835 | 2610 | 1756 | 1968 | 1253 | 1608 |
| tensile elongation (%) | 782 | 603 | 588 | 595 | 462 | 827 | 670 | 519 | 573 | 394 | 503 |

TABLE I (Cont'd.)

| Example | 12 | 13 | 14 |
|---|---|---|---|
| polyethylene | — | — | — |
| EVA | 85.2 | 85.2 | 85.2 |
| EEA | — | — | — |
| nylon 6 | | — | — |
| nylon 12 | 14 | — | — |
| polyester | — | 14 | — |
| polyurethane | — | — | 14 |
| antioxidant | 0.1 | 0.1 | 0.1 |
| distearyl thiodipropionate | 0.1 | 0.1 | 0.1 |
| maleic anhydride | 0.4 | 0.4 | 0.4 |
| dicumyl peroxide | 0.2 | 0.2 | 0.2 |
| LOI | 21 | 20 | 19 |
| tensile strength (psi) | 1966 | 2582 | 3417 |
| tensile elongation (%) | 542 | 632 | 750 |

EP 0 490 354 A2

TABLE II

| Example | 1 | 2 | 3 | 4 | 5 | 6 | 7 | 8 | 9 | 10 | 11 |
|---|---|---|---|---|---|---|---|---|---|---|---|
| Table I blend | 47 | 47 | 47 | 47 | 47 | 47 | 47 | 47 | 47 | 47 | 47 |
| magnesium hydroxide | 52.9 | 52.9 | 52.9 | 52.9 | 52.9 | 52.9 | 52.9 | 52.9 | 52.9 | 52.9 | 52.9 |
| antioxidant | 0.1 | 0.1 | 0.1 | 0.1 | 0.1 | 0.1 | 0.1 | 0.1 | 0.1 | 0.1 | 0.1 |
| LOI | 28 | 37 | 39 | 30 | 31 | 28 | 34 | 35 | 44 | 32 | 40 |
| Low Temperature Brittleness (°C) | — | -12.5 | — | -10.5 | — | -22.5 | — | — | -36 | — | -31 |
| % Deformation at 100° C | — | 80 | — | 65 | — | 91 | — | — | 29 | — | 24 |
| tensile strength (psi) | 1526 | 1374 | 1390 | 1704 | 1401 | 1159 | 1512 | 2812 | 2541 | 2220 | 2608 |
| tensile elongation (%) | 9 | 141 | 41 | 73 | 78 | 111 | 120 | 130 | 213 | 87 | 157 |

TABLE II (Cont'd.)

| Example | 12 | 13 | 14 |
|---|---|---|---|
| Table I blend | 47 | 47 | 47 |
| magnesium hydroxide | 52.9 | 52.9 | 52.9 |
| antioxidant | 0.1 | 0.1 | 0.1 |
| LOI | 39 | 30 | 39 |
| Low Temperature Brittleness (°C) | – 39 | — | — |
| % Deformation at 100° C | 62 | — | — |
| tensile strength (psi) | 2598 | 1621 | 1833 |
| tensile elongation (%) | 211 | 233 | 249 |

TABLE III

| Example | 1 | 2 | 3 | 4 | 5 | 6 | 7 | 8 | 9 | 10 | 11 |
|---|---|---|---|---|---|---|---|---|---|---|---|
| Table I blend | 47 | 47 | 47 | 47 | 47 | — | — | 47 | 47 | 47 | 47 |
| magnesium hydroxide | 50.9 | 50.9 | 50.9 | 50.9 | 50.9 | — | — | 50.9 | 50.9 | 50.9 | 50.9 |
| red phosphorus | 2 | 2 | 2 | 2 | 2 | — | — | 2 | 2 | 2 | 2 |
| antioxidant | 0.1 | 0.1 | 0.1 | 0.1 | 0.1 | — | — | 0.1 | 0.1 | 0.1 | 0.1 |
| LOI | 32 | 62 | 37 | 37 | 46 | — | — | 57 | 62 | 60 | 69 |

EP 0 490 354 A2

TABLE III (Cont'd.)

| Example | 12 | 13 | 14 |
|---|---|---|---|
| Table I blend | 47 | — | — |
| magnesium hydroxide | 50.9 | — | — |
| red phosphorus | 2 | — | — |
| antioxidant | 0.1 | — | — |
| LOI | 67 | — | — |

Notes to Tables:

1.    The polyethylene is a copolymer of ethylene and 1-butene having a density of 0.900 gram per cubic centimeter and a melt index of 0.4.

2.    EVA is a copolymer of ethylene and vinyl acetate having a vinyl acetate content of 28 percent by weight and a melt index of 3.

3.    EEA is a copolymer of ethylene and ethyl acrylate having an ethyl acrylate content of 18 percent by weight and a melt index of 2.

4.    The polyester is described as butylene/poly(alkylene ether) phthalate sold under the name HYTREL™ polyester elastomer 4056.  It bears the requisite functional groups reactive with the anhydride.

5.    The polyurethane is described as a polyester and polyether based thermoplastic polyurethane sold under the name ESTANE™ thermoplastic polyurethane 58300.  It bears the requisite functional groups reactive with the anhydride.

6.    The antioxidant is tetrakis[methylene-3-(3',5'-di-tert-butyl-4'-hydroxyphenyl)propionate]methane.

7.    The magnesium hydroxide is the one described above and in United States patent 4,098,762.

8.    LOI is Limiting Oxygen Index and is described above.

9.    Tensile strength is given in pound per square inch and is determined under ASTM D-638.

10.    Tensile elongation is given in percent and is determined under ASTM D-638.

11.    Low Temperature Brittleness is given in degrees Centigrade and is determined under ASTM D-746.

12.    % Deformation at 100°C is given in percent and is determined under ASTM D-621.

11

**Claims**

1.  A composition comprising:
    (a) a homopolymer of an ethylene compound or a copolymer comprising ethylene and one or more alpha-olefins and/or unsaturated esters, said polymer having bonded thereto, through an unsaturated diacid anhydride, about 1 to about 30 percent by weight of one or more polyamides, polyesters, and/or polyurethanes, the percent by weight being based on the weight of component (a); and
    (b) a metal hydrate flame retardant compound.

2.  The composition defined in claim 1 wherein the bonded polymer is a polyamide present in an amount of about 1 to about 15 percent by weight.

3.  The composition defined in at least one of the claims 1 and 2 wherein the anhydride is maleic anhydride.

4.  The composition defined in at least one of the claims 1 to 3 wherein component (b) is magnesium hydroxide.

5.  The composition defined in at least one of the claims 1 to 4 additionally containing red phosphorus.

6.  The composition defined in claim 4 wherein the magnesium hydroxide is surface treated with a saturated or unsaturated carboxylic acid having 8 to 24 carbon atoms or a metal salt thereof.

7.  A composition comprising:
    (a) a homopolymer of ethylene or a copolymer of ethylene and one or more alpha-olefins and/or unsaturated esters;
    (b) about 1 to about 20 percent by weight of one or more polyamides, polyesters, and/or polyurethanes, the percent by weight being based on the weight of component (a);
    (c) an organic peroxide;
    (d) an anhydride of an unsaturated diacid; and
    (e) a metal hydrate flame retardant compound.

8.  The composition defined in claim 7 additionally containing red phosphorus.

9.  An article comprising a metal or glass core and at least one layer surrounding the core comprising the composition defined in at least one of the claims 1 to 8.

10. A method of providing a modified polyethylene composition comprising admixing the components of the composition defined in at least one of the claims 7 to 9, under conditions which will cause component (b) to bond to component (a) through the anhydride.